(19) Europäisches Patentamt / European Patent Office / Office européen des brevets

(11) **EP 3 137 874 B1**

(12) **FASCICULE DE BREVET EUROPEEN**

(45) Date de publication et mention de la délivrance du brevet:
**10.04.2019 Bulletin 2019/15**

(21) Numéro de dépôt: **15720071.8**

(22) Date de dépôt: **29.04.2015**

(51) Int Cl.:
*G01N 15/14* *(2006.01)*    *G01N 21/47* *(2006.01)*
*G03H 1/04* *(2006.01)*    *G01N 15/00* *(2006.01)*

(86) Numéro de dépôt international:
**PCT/EP2015/059423**

(87) Numéro de publication internationale:
**WO 2015/166009 (05.11.2015 Gazette 2015/44)**

(54) **PROCÉDÉ DE DIAGNOSTIC DE LA MÉNINGITE**

VERFAHREN ZUR DIAGNOSE VON MENINGITIS

METHOD FOR DIAGNOSING MENINGITIS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **30.04.2014 FR 1453959**

(43) Date de publication de la demande:
**08.03.2017 Bulletin 2017/10**

(73) Titulaire: **Commissariat à l'Energie Atomique et aux Energies Alternatives 75015 Paris (FR)**

(72) Inventeurs:
• **ALLIER, Cédric**
  **F-38000 Grenoble (FR)**
• **DRANCOURT, Michel**
  **F-13012 Marseille (FR)**

(74) Mandataire: **Lavoix
2, place d'Estienne d'Orves
75441 Paris Cedex 09 (FR)**

(56) Documents cités:
**EP-A1- 2 602 608**    **EP-A1- 2 669 678**
**WO-A1-2011/049965**    **WO-A1-2014/012031**

• **A J Hand ET AL: "Automated tracking of migrating cells in phase-contrast video microscopy sequences using image registration", Journal of microscopy, 1 avril 2009 (2009-04-01), pages 62-79, XP055158603, DOI: 10.1111/j.1365-2818.2009.03144.x Extrait de l'Internet: URL:http://onlinelibrary.wiley.com/doi/10.1111/j.1365-2818.2009.03144.x/pdf cité dans la demande**
• **BOER K ET AL: "Evaluation of the XE-5000 for the automated analysis of blood cells in cerebrospinal fluid", CLINICAL BIOCHEMISTRY, ELSEVIER INC, US, CA, vol. 42, no. 7-8, 1 May 2009 (2009-05-01), pages 684-691, XP026036013, ISSN: 0009-9120, DOI: 10.1016/J.CLINBIOCHEM.2009.01.025 [retrieved on 2009-02-20]**

**Description**

L'invention concerne un procédé de diagnostic de la méningite, comprenant la détermination d'un nombre de globules blancs dans une quantité prédéterminée de liquide céphalo-rachidien à l'aide d'un tel procédé de détection, le liquide corporel étant le liquide céphalo-rachidien et les particules détectées étant les globules blancs contenus dans ledit liquide céphalo-rachidien. La méningite est alors diagnostiquée si le nombre de globules blancs détectés dans la quantité prédéterminée de liquide céphalo-rachidien est supérieur à une valeur seuil prédéterminée.

L'invention concerne de manière générale la détection de particules, telles que des cellules, dans un liquide corporel, ceci notamment afin de détecter au plus tôt une maladie éventuelle. La détection de globules blancs dans du liquide céphalo-rachidien permet par exemple de diagnostiquer des cas de méningite.

Un protocole expérimental connu pour détecter des globules blancs dans le liquide céphalo-rachidien consiste alors à déposer, sur une lamelle de microscope, une goutte d'environ 10 μL du liquide céphalo-rachidien qui a été prélevé préalablement sur le patient, l'étape de prélèvement n'étant pas concernée par la présente invention.

Il est convenu que la méningite est diagnostiquée si un échantillon de 10 μl de liquide céphalo-rachidien comporte au moins 10 globules blancs, ces globules blancs étant la marque indirecte d'une infection virale ou bactérienne.

WO 2011/049965 A1 décrit un système d'imagerie sans lentille. En outre, K. Boer et al. "Evaluation of the XE-5000 for the automated analysis of blood cells in cerebrospinal fluid", Clinical Biochemistry, vol. 42, no. 7-8 (1 mai 2009), pages 684-691, décrit un procédé de diagnostic de la méningite au moyen d'un microscope en déterminant le nombre de globules blancs dans une quantité de liquide céphalo-rachidien.

Toutefois, le dénombrement de ces globules blancs est une opération fastidieuse pour le technicien et assez imprécise, puisqu'il s'agit de compter les globules blancs au moyen d'un microscope. Une alternative plus précise, mais beaucoup plus onéreuse, longue à mettre en oeuvre et nécessitant un appareillage encombrant, consiste à recourir à des méthodes de cytométrie.

Le but de l'invention est donc de proposer un procédé et un système de détection de particules dans le liquide corporel qui soit moins coûteux et plus facile à mettre en oeuvre. D'un point de vue expérimental, l'invention permet alors d'effectuer un dénombrement en continu des particules détectées, et de diagnostiquer le cas échéant une maladie particulière.

À cet effet, l'invention a pour objet un procédé de diagnostic de la méningite selon la revendication 1.

Suivant d'autres aspects avantageux de l'invention, le procédé de diagnostic de la méningite est selon l'une quelconque des revendications dépendantes 2 à 10.

Les caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue en perspective d'un système de détection selon l'invention,

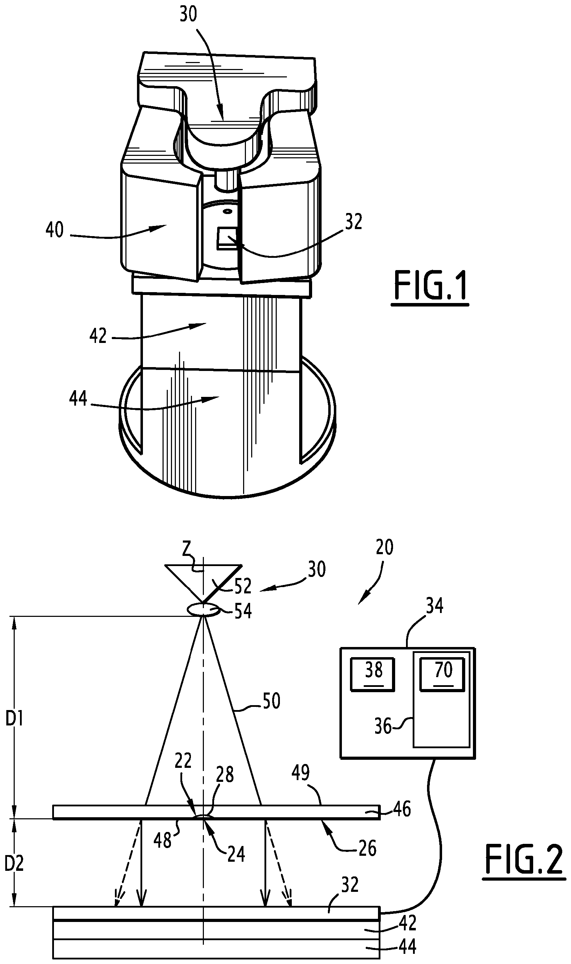

- la figure 2 est une représentation schématique du système de détection de la figure 1, le système de détection comprenant une source de lumière, un substrat transparent adapté pour recevoir le liquide corporel sous forme d'une goutte, un photodétecteur matriciel adapté pour acquérir des images successives de la goutte et une unité de traitement d'informations, l'unité de traitement d'informations étant configurée pour identifier, à partir des images acquises, des figures de diffraction élémentaires mobiles, puis pour dénombrer des particules en mouvement au sein de la goutte, à partir des figures de diffraction élémentaires mobiles identifiées,
- la figure 3 est un organigramme d'un procédé de détection selon l'invention,
- la figure 4 est une vue d'une image acquise à l'aide du photodétecteur de la figure 2, lors de l'éclairement d'une goutte de liquide céphalo-rachidien,
- la figure 5 est une vue d'une image résultante obtenue à partir de l'image acquise de la figure 4 et par soustraction, à la valeur de l'intensité de chaque pixel de l'image acquise, d'une valeur médiane de l'intensité dudit pixel, la valeur médiane étant déterminée pour un ensemble d'images acquises,
- la figure 6 est un agrandissement de la zone encadrée VI de la figure 5,
- la figure 7 est une image illustrant un suivi des figures de diffraction, les points blancs correspondant aux positions successives de centres desdites figures de diffraction,
- la figure 8 est un ensemble de points représentant le nombre de globules blancs détectés dans la goutte de liquide céphalo-rachidien, avec en abscisse le nombre de globules blancs déterminé à l'aide d'une méthode de cytométrie et en ordonnée celui déterminé à l'aide du système et procédé de détection selon l'invention, chaque point correspondant à un échantillon de liquide céphalo-rachidien d'un patient respectif,
- la figure 9 est un ensemble de vues obtenues à l'aide du photodétecteur de la figure 2 pour un même échantillon de liquide céphalo-rachidien, chacune contenant une figure de diffraction correspondant à un globule blanc respectif,
- la figure 10 est un ensemble de points représentant chacun un ratio entre l'intensité maximale et l'intensité médiane d'une région d'intérêt d'une vue respective de la figure 9 comportant une figure de diffraction correspondante,
- la figure 11 est une vue analogue à celle de la figure 10, avec plusieurs échantillons de liquide céphalo-rachidien de patients différents, et

- la figure 12 est un ensemble de deux courbes, l'une pour un globule blanc et l'autre pour un globule rouge, chaque courbe représentant un profil d'intensité au voisinage du centre de la figure de diffraction en fonction d'une distance exprimée en $\mu$m, le centre de la figure de diffraction correspondant à la distance égale à 225 $\mu$m.

Dans la suite de la description, l'expression « sensiblement égal à » définit une relation d'égalité à plus ou moins 5 %.

Sur les figures 1 et 2, un système 20 de détection de particules 22 contenues dans un liquide corporel 24, comprend un substrat transparent 26 adapté pour recevoir le liquide corporel 24 sous forme d'une goutte 28. Le système de détection 20 comprend également une source de lumière 30 et un photodétecteur matriciel 32 adapté pour acquérir plusieurs images successives d'un rayonnement transmis par la goutte 28 éclairée par la source de lumière 30.

Le système de détection 20 est de manière générale adapté pour détecter les particules 22 dans le liquide corporel 24 via une méthodologie par imagerie sans lentille, le photodétecteur matriciel 32 ne comportant pas d'optique de grossissement.

Le système de détection 20 comprend également une unité de traitement d'informations 34, visible sur la figure 2, comportant une mémoire 36 et un processeur 38 associé à la mémoire 36.

En complément facultatif, le système de détection 20 comprend un dispositif 40 à portes battantes, les portes étant peintes en noir, permettant d'isoler le rayonnement transmis par la goutte éclairée 28 de l'environnement extérieur. Le dispositif à portes battantes 40 permet, lorsque les portes battantes sont fermées, au technicien d'opérer alors en lumière ambiante, sans pour autant perturber les mesures effectuées à l'intérieur du système de détection.

Le système de détection 20 comprend également un dissipateur thermique 42 et un ventilateur 44 pour réguler la température du photodétecteur matriciel 32, notamment pour le refroidir en cas d'échauffement trop important. Ces éléments sont optionnels.

Les particules diffractantes 22 sont, par exemple, des particules biologiques, c'est-à-dire des cellules (notamment des cellules sanguines et par exemple des globules blancs ou des globules rouges), des bactéries ou colonnes bactériennes, ou encore des agrégats de cellules.

Les particules diffractantes 22 présentent généralement un diamètre inférieur à 100 $\mu$m. Le diamètre des particules diffractantes 22 est, par exemple, compris entre 1 $\mu$m et 100 $\mu$m. Les cellules, telles que les globules blancs et les globules rouges, présentent un diamètre de l'ordre de 10 $\mu$m.

Le liquide corporel 24 est un liquide ayant été prélevé au préalable sur un patient, l'étape de prélèvement ne faisant pas partie du périmètre de l'invention. Le liquide corporel 24 est par exemple du liquide céphalo-rachidien lorsque le système de détection 20 vise à diagnostiquer une méningite.

Le substrat transparent 26 est disposé entre la source de lumière 30 et le photodétecteur matriciel 32, et est sensiblement perpendiculaire à une direction verticale Z correspondant à la direction d'éclairement du liquide corporel 24 par la source de lumière 30, comme représenté sur la figure 2.

Le substrat transparent 26 comprend, par exemple, une lame transparente 48. Dans cet exemple, le substrat transparent 26 est déposé au fond d'une boîte de Pétri 46. La lame transparente 48, réalisée dans un matériau tel le verre, sert à contrôler un angle de mouillage de la goutte 28 pour que celle-ci ne s'étale pas trop, afin de faciliter son observation par imagerie sans lentille dans sa globalité. L'angle de mouillage, également appelé angle de contact, correspond à l'angle entre la lame transparente 48 et la surface concave de la goutte 28 en la périphérie extérieure de la goutte. De préférence, l'angle de mouillage de la goutte est inférieur à 90°, et encore de préférence sensiblement compris entre 30° et 60°. La boîte de Pétri 46 a ici une fonction de confinement du liquide corporel 24, afin de protéger le milieu extérieur vis-à-vis du liquide. Elle est optionnelle. Elle est adaptée pour être déposée directement sur le photodétecteur matriciel 32. La boîte de Pétri 46 comporte en complément un couvercle 49 afin de protéger le liquide corporel 24.

La goutte 28 présente par exemple un volume sensiblement égal à 10 $\mu$L, un tel volume étant généralement utilisé pour un échantillon de liquide céphalo-rachidien dans le cas du diagnostic de la méningite.

La source de lumière 30 est adaptée pour émettre un faisceau lumineux 50 selon la direction verticale Z afin d'éclairer le liquide corporel 24 comportant les particules diffractantes 22.

La source de lumière 30 est disposée à une première distance D1 de la lame transparente 48 selon la direction verticale Z. La première distance D1 présente, de préférence, une valeur comprise entre 1 cm et 30 cm, par exemple égale à 5 cm.

La source de lumière 30 est de préférence spatialement cohérente et de préférence monochromatique. Le terme monochromatique désigne une largeur spectrale inférieure à 80 nm, de préférence inférieure à 50 nm à mi-hauteur.

La source de lumière 30 comporte, par exemple, une source ponctuelle telle qu'une diode électroluminescente 52, également appelée LED (de l'anglais *Light Emitting Diode*), et un diaphragme 54 disposé au contact de la LED 52, comme représenté de manière schématique sur la figure 2. Le diaphragme 54 a un diamètre compris entre 50 $\mu$m et 500 $\mu$m, de préférence sensiblement égal à 150 $\mu$m. Cela permet d'augmenter la cohérence spatiale du rayonnement lumineux. La LED 52 présente par exemple une longueur d'ondes sensiblement égale à 617 nm.

En variante, la source de lumière 30 est constituée de la diode électroluminescente 52, et ne comporte pas de diaphragme. La diode électroluminescente 52 présente alors des dimensions suffisamment réduites pour être considérée comme spatialement cohérente, le diamètre de la diode électroluminescente 52 étant alors par exemple inférieur au dixième de la première distance D1.

En variante encore, la source de lumière 30 est une source de lumière spatialement et temporellement cohérente, par exemple une diode laser ou encore une diode laser de type VCSEL (de l'anglais *Vertical Cavity Surface Emetting Laser*).

Le photodétecteur matriciel 32 est adapté pour acquérir des images successives du rayonnement transmis par le liquide corporel 24 en forme de goutte 28 contenant les particules diffractantes 22, éclairé par le faisceau lumineux 50. Par rayonnement transmis, on entend le rayonnement traversant le liquide corporel 24 de telle sorte que le photodétecteur matriciel 32 et la source de lumière 30 sont situés de part et d'autre du liquide corporel 24 comportant les particules diffractantes 22.

Le photodétecteur matriciel 32 est un capteur d'images en deux dimensions, à savoir dans un plan sensiblement perpendiculaire à l'axe vertical Z. Le photodétecteur matriciel 32 est un capteur d'image pixélisé, par exemple un capteur CMOS (de l'anglais *Complementary Metal Oxyde Semiconductor*). En variante, le photodétecteur matriciel 28 est un capteur CCD (de l'anglais *Charge Coupled Device*).

Le photodétecteur matriciel 32 comporte une pluralité de pixels, non représentés, chacun présentant des dimensions inférieures ou égales à 10 $\mu$m. Dans l'exemple de réalisation des figures 1 et 2, chaque pixel est en forme d'un carré de côté sensiblement égal à 2,2 $\mu$m.

Le photodétecteur matriciel 32 peut comporter en complément des microlentilles, non représentées, chaque microlentille étant disposée au-dessus d'un pixel correspondant. De telles microlentilles sont intégrées au capteur et permettent d'améliorer le rendement de collecte, sans pour autant former une optique de grossissement disposée entre le substrat transparent 26 et le photodétecteur 32.

Les images acquises par le photodétecteur matriciel 32 sont formées par le rayonnement transmis directement par le liquide corporel éclairé 24, en l'absence d'optique de grossissement disposée entre le substrat transparent 26 et le photodétecteur matriciel 32. Le photodétecteur 32 est également appelé dispositif d'imagerie sans lentille, et est apte à former une image du liquide 24, tout en étant placé à une faible distance de ce dernier. Par faible distance, on entend une distance inférieure à quelques centimètres, de préférence inférieure à 1 cm. Le photodétecteur 32 est disposé à une deuxième distance D2 de la lame transparente 48 selon la direction verticale Z, et la deuxième distance D2 est alors inférieure à quelques centimètres, de préférence inférieure à 1 cm, et par exemple égale à 700 $\mu$m.

Le fait de privilégier une faible valeur pour la deuxième distance D2, c'est-à-dire une faible distance entre le photodétecteur matriciel 30 et le substrat transparent 26, permet de limiter les phénomènes d'interférence entre différentes figures de diffraction lorsque le liquide corporel 24 est éclairé.

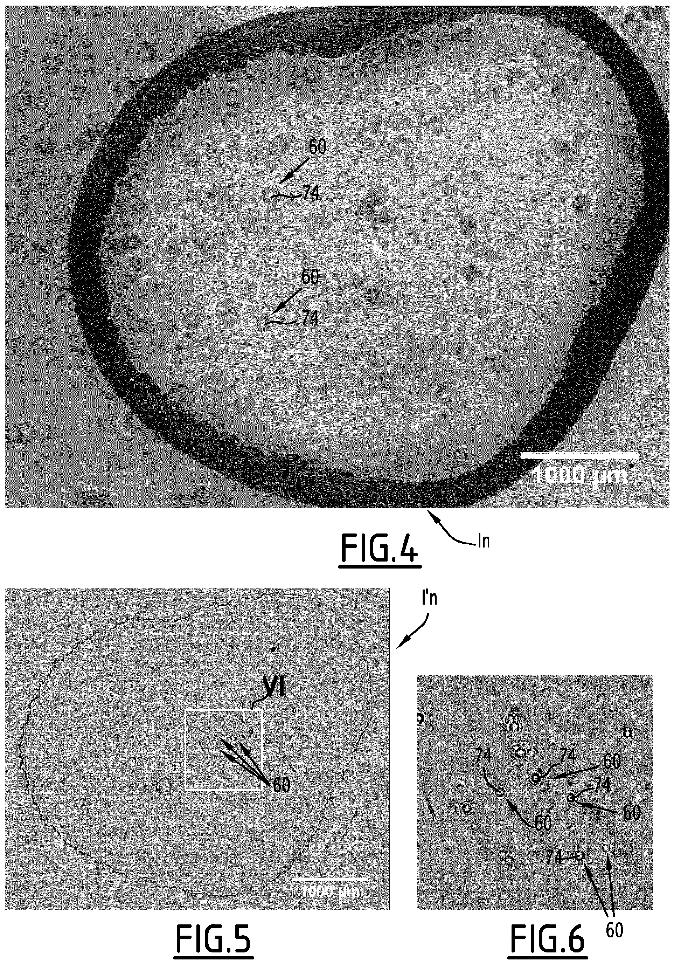

Le photodétecteur matriciel 32 est alors propre réaliser une image d'au moins une figure de diffraction élémentaire 60 transmise par le liquide corporel 24, chaque figure de diffraction élémentaire 60 correspondant à des ondes diffractées par une particule diffractante 22, lors de l'éclairement du liquide corporel 24 en forme de la goutte 28. Ainsi, le photodétecteur matriciel 32 permet d'obtenir une image $I_n$, dite image observée, comportant une ou plusieurs figures de diffraction élémentaires 60, où n est un indice compris entre 1 et N et correspondant au numéro de l'image dans la séquence d'images successives acquises, avec n et N nombres entiers supérieurs ou égaux à 1. La cadence d'acquisition est généralement comprise entre 50 images par secondes et une image toutes les 10 à 20 secondes. La figure 4 représente une pluralité de figures de diffraction élémentaires 60 correspondant à des globules blanc, chaque figure étant constituée d'une zone centrale, dont l'intensité est sensiblement homogène, cette zone centrale étant entourée d'anneaux concentriques, dont l'intensité est alternativement faible (anneaux sombres) et élevée (anneaux clairs).

Chaque image acquise $I_n$ par le photodétecteur matriciel 32 comporte une pluralité de pixels $I_n(x,y)$, chacun étant repéré par une abscisse x et une ordonnée y dans l'image et le photodétecteur matriciel 32 est adapté pour mesurer l'intensité $I(x,y)$ de chaque pixel.

La mémoire 36 est apte à stocker un logiciel 70 de détection de particules 22 dans le liquide corporel 24.

Le processeur 38 est adapté pour exécuter le logiciel de détection 70.

Le logiciel de détection 70 forme des moyens de détection de particules 22 dans le liquide corporel 24.

En variante, les moyens de détection 70 sont réalisés sous forme de composants logiques programmables, ou encore sous forme de circuits intégrés dédiés.

Le logiciel de détection 70 est adapté pour identifier, à partir des images acquises $I_n$, $I_{n+1}$, des figures de diffraction élémentaires 60 mobiles, et dénombrer des particules 22 en mouvement au sein de la goutte 28, à partir des figures de diffraction élémentaires mobiles identifiées.

Afin d'identifier les figures de diffraction élémentaires mobiles, le logiciel de détection 70 est par exemple adapté pour détecter, sur chaque image acquise $I_n$, au moins une figure de diffraction élémentaire 60 correspondant à une particule 22 au sein de la goutte 28, puis adapté pour suivre la position de chaque figure de diffraction élémentaire détectée 60 d'une image acquise $I_n$ à un instant $t_n$, à une image $I_{n+i}$ acquise à un instant $t_{n+i}$, i étant un indice entier généralement compris entre 1 et 10. De préférence, l'indice i est égal à 1 et on détecte alors l'évolution de la position de chaque figure élémentaire détectée 60 entre deux images consécutives $I_n$ et $I_{n+1}$.

Par suivi de position, on entend le suivi de la position d'un point de la figure de diffraction élémentaire 60 entre deux images $I_n$ et $I_{n+i}$. Ce point peut par exemple être un centre 74 de la figure de diffraction élémentaire 60. D'une façon générale, une figure de diffraction est considérée comme en mouvement si entre deux images acquises $I_n$, $I_{n+i}$, la figure de diffraction se déplace selon une distance supérieure à une distance minimale Dmin prédéterminée.

La distance minimale prédéterminée Dmin est par exemple supérieure à 5 pixels, voire à 10 pixels, pour un écart temporel de l'ordre d'une seconde, entre les instants d'acquisition $t_n$, $t_{n+i}$.

Ainsi, le logiciel de détection 70 permet de détecter des figures de diffraction élémentaires 60 mobiles, chacune d'entre elle correspondant à une particule en mouvement dans le liquide.

Afin d'identifier les figures de diffraction élémentaires mobiles, le logiciel de détection 70 est, en variante, adapté pour déterminer pour chaque pixel, une image, dite image de fond $I_{background}$, correspondant à une composante immobile d'un ensemble d'images $I_m$ à $I_{m+p}$, où m est une valeur particulière de l'indice n, p est un nombre entier supérieur à 1, généralement compris entre 3 et 10, et par exemple égal à 5. Le logiciel de détection 70 est alors adapté pour calculer, pour chaque image acquise $I_n$, une image résultante $I'_n$ par soustraction pour chaque pixel $I_n(x,y)$ de l'image acquise de la valeur du pixel $I_{background}(x,y)$ de l'image de fond $I_{background}$ déterminée. Ainsi,

$$I'_n(x,y) = I_n(x,y) - I_{background}(x,y) \tag{1}$$

L'image résultante $I'_n$ fait alors apparaître la composante mobile de chacune des images $I_n$ comprenant les figures de diffraction élémentaires 60, et le logiciel de détection 70 est adapté pour détecter, sur chaque image résultante $I'_n$, une ou plusieurs figures de diffraction, chaque figure de diffraction détectée sur l'image résultante $I'_n$ correspondant à une figure de diffraction élémentaire mobile.

L'image de fond $I_{background}$ est par exemple une image, dite image médiane $I_{med}$, dont chaque pixel $I_{med}(x,y)$ a pour valeur la valeur médiane des pixels $I_m(x,y),.., I_{m+p}(x,y)$ de l'ensemble d'images $I_m$ à $I_{m+p}$. Autrement dit,

$$I_{background}(x,y) = I_{med}(x,y) = med\left[I_m(x,y)...I_{m+p}(x,y)\right] \tag{2}$$

où *med* désigne l'opérateur médiane.

Les p images $I_m$ à $I_{m+p}$ peuvent précéder l'image In. Alternativement, l'image In peut faire partie de l'ensemble des p images dont on calcule l'image de fond $I_{background}$.

L'image de fond $I_{background}$ représente alors une image de référence, sur laquelle les mouvements des figures de diffraction élémentaires, visibles sur les images $I_m$ à $I_{m+p}$ sont gommés ou atténués. Ainsi, l'image de fond $I_{background}$ peut être considérée comme l'image d'un fond commun à chacune des images $I_m$ à $I_{m+p}$, correspondant à la composante immobile de chacune de ces images.

De façon alternative, l'image de fond $I_{background}$ est obtenue en calculant la valeur moyenne de chaque pixel de l'ensemble d'images $I_m$ à $I_{m+p}$. Autrement dit :

$$I_{background}(x,y) = I_{mean}(x,y) = mean\left[I_m(x,y)...I_{m+p}(x,y)\right] \tag{3}$$

où *mean* désigne l'opérateur moyenne, m est une valeur particulière de l'indice n, p est un nombre entier supérieur à 1, généralement compris entre 3 et 10, et par exemple égal à 5.

En complément, l'image résultante $I'_n$ ainsi calculée est utilisée pour suivre la position de chaque figure de diffraction élémentaire détectée 60. Autrement dit, selon ce complément optionnel, le logiciel de détection 70 est par exemple adapté pour détecter les figures de diffraction, suivre la position des figures de diffraction et dénombrer les particules 22 en mouvement dans la goutte 28 d'après les figures de diffraction élémentaires mobiles, à partir des images résultantes $I'_n$ en lieu et place des images acquises $I_n$, avec l'indice n variant entre 1 et N.

Ainsi, il est possible, d'identifier les figures de diffraction élémentaires 60 mobiles entre deux images $I_n$, $I_{n+i}$. Leur dénombrement permet d'estimer le nombre de particules en mouvement dans le liquide 24.

Un aspect important de l'invention est donc la discrimination entre les figures élémentaires immobiles et les figures de diffraction élémentaires mobiles, ces dernières étant dénombrées pour estimer le nombre de particules dans le liquide.

Lorsque le liquide 24 à analyser se présente sous la forme d'une goutte 28, les courants de convection permettent le déplacement des particules 22 dans la goutte. La détection de ces particules, et leur dénombrement, permet d'éviter la détection d'éléments parasites non présents dans la goutte 28, mais pouvant générer des figures de diffraction élémentaires sur le photodétecteur et, par conséquent, fausser la mesure. De tels éléments sont par exemple des poussières, voire des rayures, présents sur le support transparent 26, sur l'élément de confinement 46 ou à la surface du photodétecteur 32. En dénombrant uniquement les particules 22 en mouvement, on évite la prise en compte de ces éléments immobiles, qui génèrent des figures de diffraction élémentaires fixes, c'est-à-dire immobiles, contrairement aux particules en mouvement dans la goutte.

Précisons que l'augmentation de température de la goutte 28 permet d'amplifier les courants de convection au sein de la goutte 28, ce qui augmente la mobilité des particules 22 présentes dans cette dernière. Du fait de la proximité entre la goutte 28 et le photodétecteur 32, la température de la goutte 28 tend à augmenter vers une température comprise entre 40° Celsius et 50° Celsius, favorisant alors le mouvement des particules 22.

Aussi, d'une façon générale, il est préférable que le liquide à analyser 24 soit mobile, et en particulier déposé sous la forme de la goutte 28, déposée sur le substrat transparent 26 et exposée à l'air libre : cela permet un mouvement spontané des particules 22 dans la goutte 28. Le fait de disposer du liquide corporel 24 sous la forme de la goutte 28 comporte de nombreux avantages :

- un volume de l'ordre de quelques $\mu$l à quelques dizaines de $\mu$l, suffisamment élevé pour établir un diagnostic fiable,
- une mise en mouvement spontanée des particules 22 à détecter,
- une simplicité de mise en oeuvre, un simple dépôt étant suffisant,
- une compatibilité avec une observation par imagerie sans lentille, la profondeur de champ pouvant atteindre plusieurs centimètres : toutes les particules 22 présentes dans la goutte produisent une figure de diffraction élémentaire 60 exploitable.

En complément facultatif, le logiciel de détection 70 est adapté pour caractériser les figures de diffraction élémentaires mobiles identifiées. Le terme « caractériser » désigne la détermination d'un paramètre quantitatif relatif à une figure de diffraction élémentaire. Un exemple d'un tel paramètre sera décrit par la suite.

En complément facultatif, le logiciel de détection 70 est est également adapté pour trier les figures de diffraction élémentaires détectées 60 suivant au moins deux catégories distinctes, pour classer les particules 22 correspondantes aux figures de diffraction élémentaires détectées 60 suivant au moins deux classes distinctes, chaque classe étant associée à une catégorie respective. Le tri, également appelé classification, est effectué en fonction d'un paramètre déterminé lors de la phase de caractérisation des particules.

Afin notamment de suivre la position des figures de diffraction, le logiciel de détection 70 est adapté pour localiser, dans l'image acquise $I_n$ ou dans l'image résultante $I'_n$, un point particulier, par exemple le centre 74, de chaque figure de diffraction élémentaire 60, comme représenté sur les figures 4 et 6. La localisation de chaque point particulier, tel que le centre 74, est par exemple effectuée en appliquant une fonction d'autocorrélation, de préférence normée, de manière à obtenir, à partir de l'image observée $I_n$ et d'une figure de diffraction élémentaire de référence $I_R$, d'une image de corrélation $I_C$, vérifiant l'équation suivante :

$$I_C(x, y) = \frac{\sum_{i,j} I_R(i, j) \times I_n(x+i, y+j)}{\sqrt{\sum_{i,j} I_R(i, j)^2 \times \sum_{i,j} I_n(x+i, y+j)^2}} \qquad (4)$$

Sur l'image de corrélation $I_C$, chaque pic d'intensité correspondant alors à la position du centre 74 de la figure de diffraction correspondant à l'image de référence $I_R$.

La figure de diffraction élémentaire de référence $I_R$ est préalablement établie, sur la base d'une modélisation ou sur la base d'images expérimentales.

En variante, pour détecter le centre 74 de la figure de diffraction, le logiciel de détection 70 est adapté pour reconstruire une image des particules diffractantes 22 à partir de l'image acquise $I_n$ ou de l'image résultante $I'_n$, et suivant un algorithme de reconstruction holographique connu. Un tel algorithme permet à partir d'une figure de diffraction élémentaire, de reconstruire la géométrie et/ou la position de l'objet diffractant. Le logiciel de détection 70 est ensuite propre à détecter dans l'image reconstruite la position correspondante au centre 74 de chaque figure de diffraction, puis à déterminer une région de l'image acquise $I_n$ ou résultante $I'_n$, cette région comportant la figure de diffraction élémentaire 60 correspondante. Le logiciel de détection 70 est enfin propre à détecter le centre 74 de la figure de diffraction par correspondance avec la position détectée dans l'image reconstruite. La mise en oeuvre d'un tel algorithme nécessite toutefois une maîtrise de la géométrie du liquide. Il s'applique notamment lorsqu'on analyse un liquide remplissant une chambre fluidique, le liquide étant mis en mouvement dans ladite chambre.

En variante, la détermination du centre 74 d'une figure de diffraction élémentaire 60 est effectuée manuellement, l'opérateur réalisant une sélection manuelle de la zone de l'image considérée comme représentative de la zone centrale d'une figure de diffraction élémentaire correspondante 60.

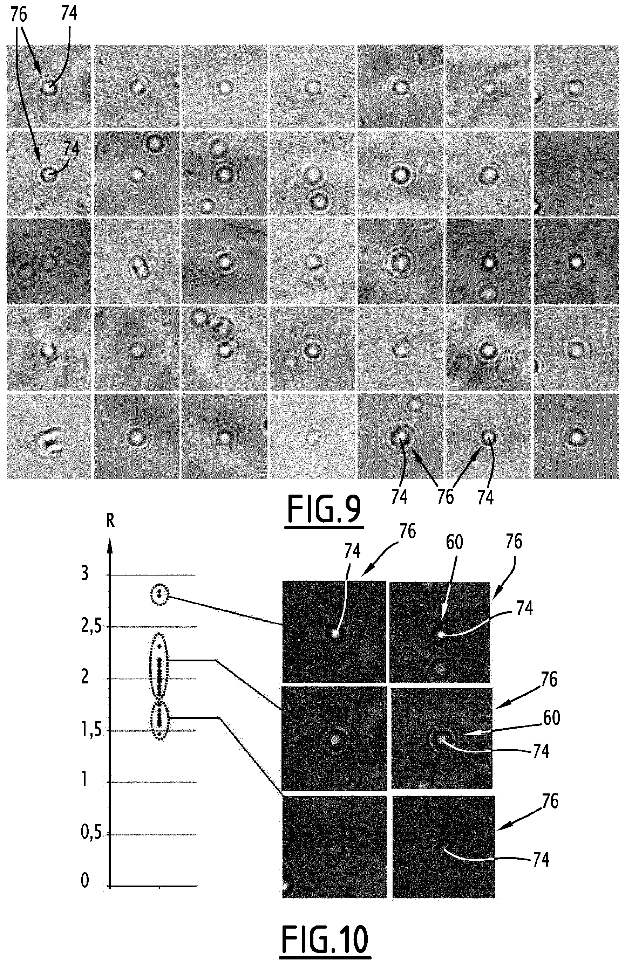

A partir des coordonnées, dans l'image $I_n$, du centre 74 de chaque figure de diffraction élémentaire ainsi identifié, on définit par exemple une région d'intérêt 76 autour de ce centre 74, comme représenté sur les figures 9 et 10. La région d'intérêt 76 comprend typiquement de 10 à 1000 pixels, de préférence de 10 à 100 pixels.

Le logiciel de détection 70 est adapté pour effectuer un suivi de la position de chaque figure de diffraction élémentaire 60 détectée d'une image acquise $I_n$ à l'image acquise suivante $I_{n+1}$, ou respectivement d'une image résultante $I'_n$ à l'image résultante suivante $I'_{n+1}$, à l'aide d'un procédé de suivi de cellules (de l'anglais *cell tracking*) qui consiste par exemple à appairer dans deux images successives $I_n$, $I_{n+1}$, $I'_n$, $I'_{n+1}$, les particules les plus proches. Un tel procédé de suivi de cellules est par exemple décrit dans l'article « Automated tracking of migrating cells in phase-contrast video microscopy sequences using image registration » de Hand A. J.; Sun T.; Barber D. C.; Hose D. R, MacNeil S., publié dans la revue Journal of Microscopy en 2009, volume 234, en pages 62 à 79.

Le logiciel de détection 70 est alors adapté pour déterminer, parmi les figures de diffraction élémentaires suivies 60, les figures de diffraction mobiles dont le déplacement entre deux images acquises successives $I_n$, $I_{n+1}$, respectivement entre deux images résultantes successives $I'_n$, $I'_{n+1}$, est supérieur à la distance minimale prédéterminée $D_{min}$, les particules correspondant à ces figures de diffraction élémentaires 60 mobiles étant alors considérées comme des particules en mouvement au sein de la goutte 28. Le logiciel de détection 70 est en outre adapté pour dénombrer les particules en mouvement au sein de la goutte 28, c'est-à-dire celle dont le déplacement des figures de diffraction correspondantes est supérieur à la distance minimale prédéterminée $D_{min}$.

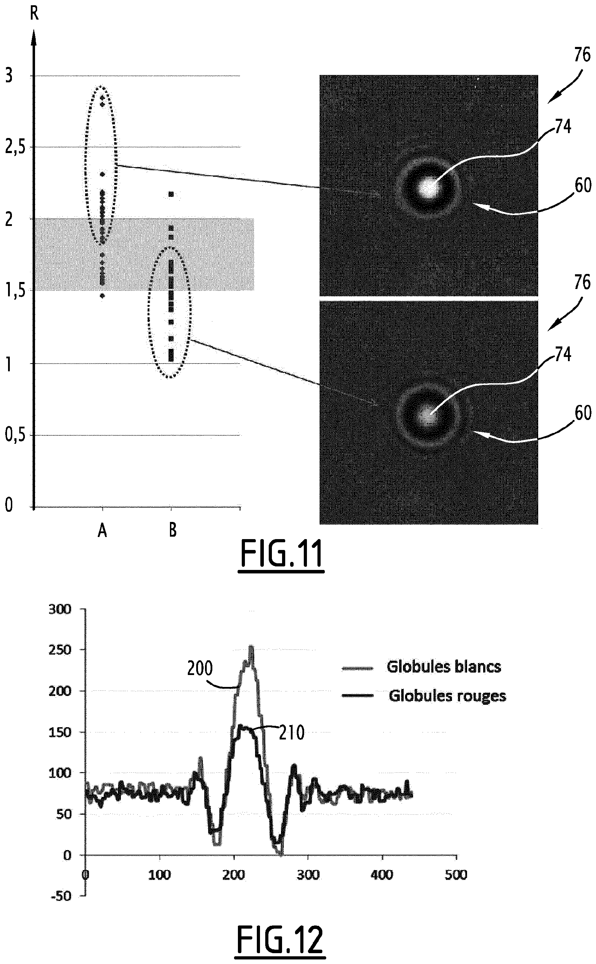

Le logiciel de détection 70 est, en complément optionnel, adapté pour caractériser chaque figure de diffraction élémentaire mobile 60 identifiée, c'est-à-dire déterminer un ou plusieurs critères pour chacune de ces figures. Un tel critère est, par exemple, un ratio R entre l'intensité maximale et l'intensité médiane (ou l'intensité moyenne) de la région d'intérêt 76 de ladite figure de diffraction. Des exemples de valeur du ratio R pour différentes figures de diffraction 60, chacune associée à une région d'intérêt 76 correspondante, sont illustrés sur les figures 10 et 11.

Le logiciel de détection 70 est alors apte à trier les figures de diffraction élémentaires détectées 60 suivant au moins deux catégories distinctes selon le critère de caractérisation choisi, afin de classer les particules correspondants aux figures de diffraction élémentaires détectées suivant des classes distinctes.

La classification de la dite figure de diffraction 60 est alors effectuée par comparaison du ratio calculé R avec au moins un seuil prédéterminé. Autrement dit, selon cet exemple de réalisation, un critère de classification des figures est une relation de comparaison du ratio calculé R avec un ou plusieurs seuils prédéterminés correspondants.

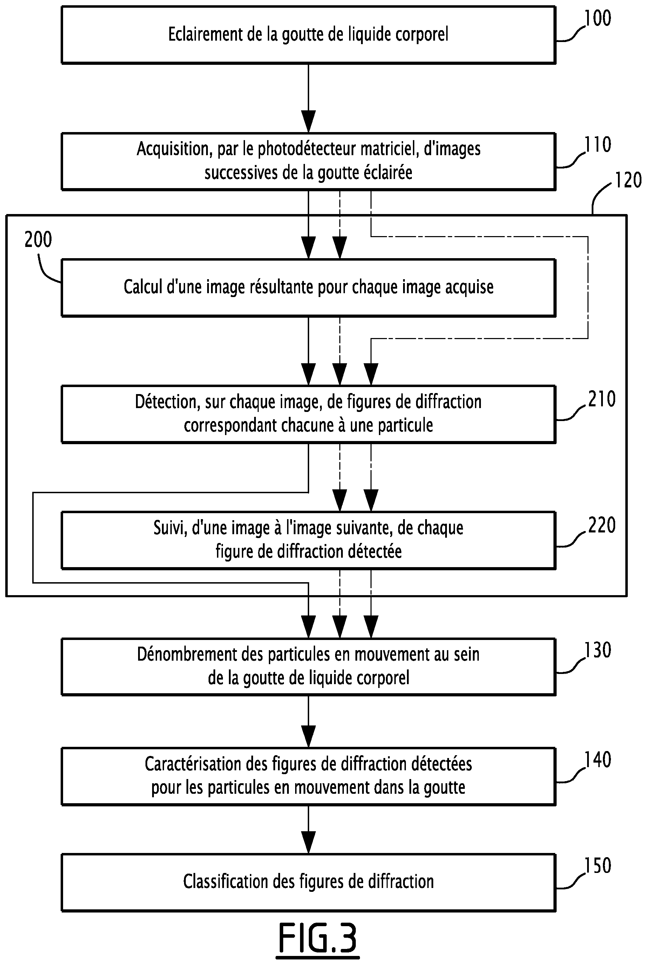

Le fonctionnement du système de détection 20 selon l'invention va être à présent décrit à l'aide de la figure 3 représentant un organigramme du procédé de détection selon l'invention.

Lors de l'étape initiale 100, le liquide corporel 24 est déposé sous forme de la goutte 28 sur le substrat transparent 26, en particulier sur la lame transparente 48. Dans l'exemple de réalisation décrit, et afin de diagnostiquer une méningite, le liquide corporel 24 est du liquide céphalo-rachidien, et la quantité de liquide corporel déposée sur le substrat transparent 26, sous la forme d'une goutte 28, est par exemple égale à 10 $\mu$m. La lame transparente 48 est elle-même posée au fond de la boîte de Pétri 46 afin de contrôler l'étalement de la goutte 28 sur la lame 48. La goutte 28 de liquide corporel est alors éclairée à l'aide de la source de lumière 30 spatialement cohérente, le faisceau lumineux 50 étant dirigé selon la direction verticale Z.

Lors de l'étape 110, le photodétecteur matriciel 32 effectue l'acquisition séquentielle de plusieurs images de transmission $I_n$, $I_{n+1}$ à des instants successifs $t_n$, $t_{n+1}$. Chaque image de transmission $I_n$, $I_{n+1}$ est formée par le rayonnement transmis, à l'instant d'acquisition $t_n$, $t_{n+1}$, correspondant, par le liquide corporel 24 éclairé. Autrement dit, le photodétecteur matriciel 32 réalise des images des figures de diffraction élémentaires 60 transmises par les particules se trouvant dans le liquide corporel éclairé 24, chaque figure de diffraction élémentaire correspondant à des ondes diffractées par les particules diffractantes 22 lors de l'éclairement du liquide 24, ces ondes diffractées interférant avec l'onde lumineuse incidente.

Le nombre d'images acquises $I_n$ est par exemple égal à 10, et le nombre N est alors égal à 10.

L'observation d'une figure de diffraction exploitable, en plaçant le photodétecteur matriciel 32 à une distance relativement faible est notamment due à l'absence d'optique de grossissement entre le liquide corporel 24 et le photodétecteur matriciel 32.

Lors de l'étape d'acquisition 110, le photodétecteur 32 est de préférence disposé à une faible distance du liquide corporel 24, la deuxième distance D2 entre le liquide corporel 24 et le photodétecteur 32 selon la direction verticale Z étant par exemple de l'ordre de quelques millimètres, et de préférence inférieure à 1 cm.

A l'issue de l'étape d'acquisition 110, le logiciel de détection 70 effectue, lors de l'étape 120, l'identification, à partir des images acquises $I_n$, $I_{n+1}$, de figures de diffraction élémentaires 60 mobiles. Cette étape 120 d'identification des figures de diffraction mobiles sera décrite plus en détail par la suite.

Lors de l'étape suivante 130, le logiciel de détection 70 réalise le dénombrement des particules 22 en mouvement au sein de la goutte 28, à partir des figures de diffraction élémentaires mobiles ainsi identifiées.

En complément optionnel, le logiciel de détection 70 peut mettre en oeuvre, lors de l'étape 140, la caractérisation des figures de diffraction élémentaires détectées correspondant aux particules en mouvement suivant au moins deux catégories distinctes, afin de classer, lors de l'étape 150, les particules en mouvement associées à ces figures de diffraction élémentaires détectées. L'étape de caractérisation 140 sera décrite plus en détail par la suite.

Pour identifier les figures de diffraction mobiles lors de l'étape 120, trois méthodes vont être à présent décrites.

Selon une première méthode, représentée sur la figure 3 par le cheminement en trait continu à l'intérieur de l'étape 120, le logiciel de détection 70 détermine lors d'une sous-étape 200, pour chaque pixel $(x,y)$, une valeur médiane, ou en variante une valeur moyenne, de l'intensité dudit pixel pour un ensemble d'images acquises $I_m$ à $I_{m+p}$, et de préférence pour l'ensemble des images acquises, c'est-à-dire les images $I_n$ avec n compris entre 1 et N. On établit alors l'image de fond $I_{background}$ préalablement définie selon l'équation (2), ou en variante selon l'équation (3).

Le logiciel de détection 70 calcule ensuite, toujours lors de cette sous-étape 200, pour chaque image acquise dudit ensemble, de préférence pour chacune des images acquises, l'image résultante $I'_n$ par soustraction selon les équations (1) et (2) précédentes, à la valeur mesurée de l'intensité de chaque pixel de l'image acquise $I_n$, de la valeur médiane préalablement déterminée, ou en variante de la valeur moyenne selon les équations (1) et (3) précédentes.

Le calcul de ces images résultantes $I'_n$ par soustraction de la valeur médiane, ou en variante de la valeur moyenne, de chacun des pixels, permet de visualiser les figures de diffraction élémentaires mobiles, la composante dite immobile de l'image In étant retirée, ou, au moins, atténuée. Ces figures de diffraction mobiles correspondent aux particules 22 en mouvement dans la goutte 28. Autrement dit, les images résultantes $I'_n$ permettent d'identifier les particules en mouvement dans la goutte 28. Cela est d'ailleurs bien visible en comparant la figure 4 correspondant à une image acquise $I_n$, avec les figures 5 et 6 correspondant à l'image résultante $I'_n$ associée à l'image acquise de la figure 4. Sur la figure 5, seules les particules mobiles de la figure 4 apparaissent. On constate d'ailleurs que les seules figures de diffraction visibles sur la figure 5 sont situées à l'intérieur d'une zone correspondant à la goutte 28 (la périphérie extérieure de la goutte 28 étant en forme d'une bordure périphérique assez large sur les figures 4 et 5), alors que, sur la figure 4 correspondant à l'image acquise, des figures de diffraction sont visibles aussi bien à l'intérieur de la zone correspondant à la goutte 28 qu'en dehors de cette zone correspondant à la goutte 28.

Après la sous-étape 200, le logiciel de détection 70 détecte, lors de la sous-étape 210, sur chaque image résultante $I'_n$, chaque figure de diffraction élémentaire 60 correspondant à une particule 22 au sein de la goutte 28. A cet effet, le logiciel de détection 70 effectue, par exemple, tel que décrit précédemment, une comparaison entre l'image résultante et une figure de diffraction de référence par une autocorrélation, de préférence normée, entre ladite image et la figure de diffraction de référence, chaque pic d'intensité dans l'image d'autocorrélation obtenu correspondant à la position du centre 74 d'une figure de diffraction correspondante.

En variante, comme décrit précédemment, la localisation dans l'image du centre 74 de chaque figure de diffraction élémentaire 60 est réalisée à partir d'une reconstruction d'une image de la particule 22 associée à la figure de diffraction élémentaire 60 correspondante en mettant en oeuvre un algorithme connu de reconstruction, puis de la détection, dans l'image reconstruite, de la position correspondant au centre de ladite figure de diffraction élémentaire 60.

En variante encore, la détection du centre 74 de chaque figure de diffraction élémentaire 60 est effectuée manuellement par l'opérateur, celui-ci réalisant une sélection manuelle de la zone de l'image considérée comme représentative de la zone centrale de la figure de diffraction.

En variante encore, le centre 74 de chaque figure de diffraction élémentaire 60 est obtenu par des opérations de seuillage des niveaux de gris, puis des opérations booléennes appliquées à l'image seuillée.

Une fois les figures de diffraction détectées, chacune correspondant à une particule 22 en mouvement dans la goutte 28, le logiciel de détection 70 dénombre ensuite les particules en mouvement au sein de la goutte 28 de liquide corporel, lors de l'étape 130 qui suit la sous-étape 210 selon la première méthode d'identification des figures de diffraction mobiles.

Selon une deuxième méthode d'identification, représentée sur la figure 3 par le cheminement en trait pointillé à l'intérieur de l'étape 120, le logiciel de détection 70 calcule toujours lors de la sous-étape 200 l'image résultante $I'_n$ de chaque image acquise $I_n$, puis détecte lors de la sous-étape 210 les figures de diffraction dans l'image résultante $I'_n$.

Selon la deuxième méthode, le logiciel de détection 70 effectue en complément, lors d'une sous-étape 220, le suivi d'une image résultante $I'_n$ à l'image résultante suivante $I'_{n+1}$ de chaque figure de diffraction détectée. Cette sous-étape est effectuée en appliquant un algorithme de suivi de cellule, comme décrit précédemment, tel que l'algorithme décrit dans l'article précité de Hand et al.

Cette deuxième méthode permet alors une identification encore plus fiable des figures de diffraction mobiles correspondant aux particules en mouvement dans la goutte 28.

Lors de l'étape 130 qui suit la sous-étape 220 selon cette deuxième méthode d'identification, le logiciel de détection 70 dénombre alors les particules en mouvement au sein de la goutte 28 de liquide corporel, c'est-à-dire les particules 22 dont les figures de diffraction élémentaires correspondantes 60 ont effectué un déplacement supérieur à la distance minimale prédéterminée $D_{min}$ entre deux acquisitions successives correspondants aux instants $t_n$, $t_{n+1}$. Le déplacement de chaque figure de diffraction élémentaire 60 d'une image résultante $I'_n$ à l'autre $I'_{n+1}$ est de préférence

calculé en mesurant le déplacement du centre 74 de ladite figure d'une image $I'_n$ à l'autre $I'_{n+1}$.

Le fait de dénombrer les particules en mouvement au sein de la goutte 28 en effectuant en outre un suivi des figures de diffraction à partir des images résultantes $I'_n$, $I'_{n+1}$ permet de déterminer avec davantage de précision le nombre de particules en mouvement dans la goutte 28.

Selon une troisième méthode d'identification, représentée sur la figure 3 par le cheminement en trait mixte à l'intérieur de l'étape 120, le calcul de l'image résultante n'est pas effectué, et le procédé passe directement de l'étape 110 à la sous-étape 210 au cours de laquelle le logiciel de détection 70 détecte, sur chaque image acquise $I_n$ avec n variant entre 1 et N, chaque figure de diffraction élémentaire 60 correspondant à une particule 22 au sein de la goutte 28. Cette détection est effectuée de manière identique à ce qui a été décrit précédemment pour la détection des figures de diffraction dans chaque image résultante $I'_n$, à la différence que, selon cette troisième méthode identification, la détection est ici effectuée dans chaque image acquise $I_n$.

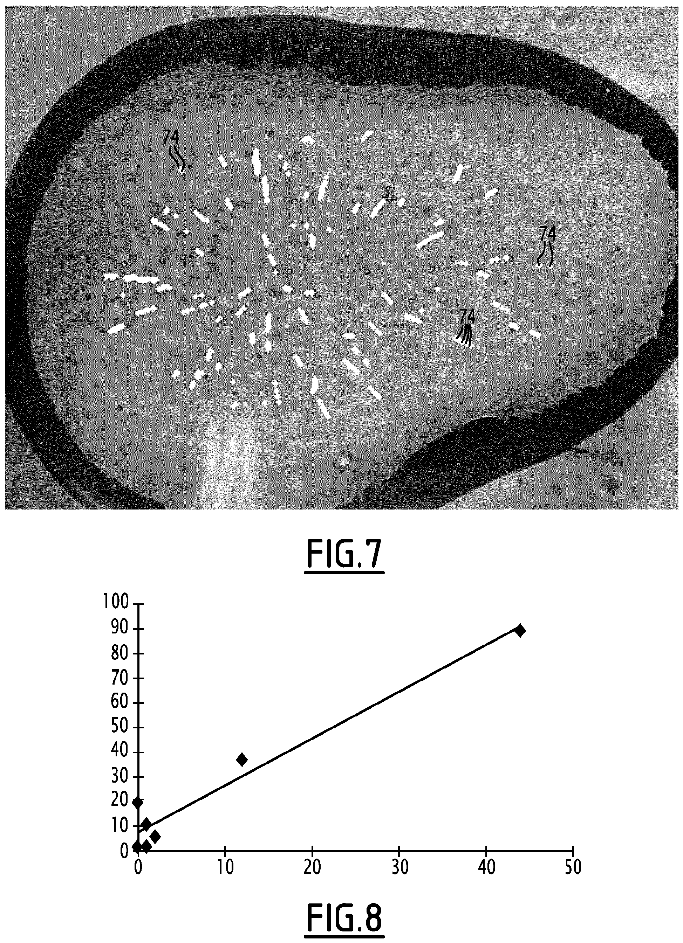

Selon cette troisième méthode d'identification, le logiciel de détection 70 effectue ensuite, lors de la sous-étape suivante 220, le suivi d'une image acquise $I_n$, à l'image acquise suivante $I_{n+1}$, de chaque figure de diffraction détectée. Cette sous-étape est effectuée en appliquant l'algorithme de suivi de cellule, comme décrit précédemment, tel que l'algorithme décrit dans l'article précité de Hand et al. Le suivi des figures de diffraction 60 dans les images acquises $I_n$ est illustré sur la figure 7 où les points blancs correspondent aux positions successives des centres 74 desdites figures de diffraction.

Lors de l'étape 130 qui suit la sous-étape 220 selon cette troisième méthode d'identification, le logiciel de détection 70 dénombre alors les particules en mouvement au sein de la goutte 28 de liquide corporel, c'est-à-dire les particules 22 dont les figures de diffraction élémentaires correspondantes 60 ont effectué un déplacement supérieur à la distance minimale prédéterminée $D_{min}$ entre deux acquisitions successives correspondants aux instants $t_n$, $t_{n+1}$.

Cette troisième méthode d'identification permet alors d'identifier les figures de diffraction mobiles directement dans les images acquises, sans avoir à calculer l'image de fond $I_{background}$, tout en obtenant des résultats suffisamment fiables pour permettre de détecter au plus tôt une maladie éventuelle, par exemple de diagnostiquer des cas de méningite.

Le procédé de détection de particules selon l'invention, et de dénombrement de particules en mouvement au sein de la goutte 28, permet de déterminer, par exemple, le nombre de globules blancs dans une quantité prédéterminée de liquide céphalo-rachidien, le liquide corporel 24 étant le liquide céphalo-rachidien et les particules détectées 22 étant les globules blancs contenus dans ledit liquide céphalo-rachidien.

La détermination du nombre de globules blancs dans une quantité prédéterminée de liquide céphalo-rachidien permet alors d'effectuer un diagnostic de la méningite, puisqu'il est généralement considéré qu'une méningite est diagnostiquée si le nombre de globules blancs présents dans une quantité prédéterminée de liquide céphalo-rachidien est supérieur à une valeur seuil prédéterminée. La valeur seuil prédéterminée est par exemple égale à 10 lorsque la quantité prédéterminée de liquide céphalo-rachidien est sensiblement égale à 10 $\mu$L.

En complément, lors de l'étape 110 d'acquisition des images successives de la goutte éclairée 28, la goutte 28 est en outre chauffée afin de favoriser le déplacement des particules 22 au sein de la goutte 28. Le chauffage de la goutte 28 est par exemple mis en oeuvre à l'aide du photodétecteur matriciel 32, celui-ci formant une source de chaleur. Dans l'exemple de réalisation de la figure 1, le chauffage de la goutte 28 est par exemple obtenu en diminuant le refroidissement effectué par le dissipateur thermique 42 et le ventilateur 44, afin de provoquer un léger échauffement du photodétecteur matriciel 32, puis de la goutte 28 située à proximité dudit photodétecteur 32. Le chauffage de la goutte 28 est par exemple de l'ordre de quelques degrés Celsius par rapport à la température ambiante, la température de la goutte 28 étant par exemple comprise entre 40° Celsius et 50° Celsius.

La figure 8 montre alors que les résultats obtenus à l'aide du procédé de détection selon l'invention sont cohérents avec les résultats obtenus via une méthode de référence pour le comptage de particules, en l'occurrence la cytométrie. Le procédé de détection selon l'invention permet d'identifier efficacement les échantillons de liquide corporel 24 comportant un nombre important de particules en mouvement par rapport aux échantillons de liquide corporel 24 comportant peu de particules 22 en mouvement.

Dans l'exemple de la figure 8, le liquide corporel 24 est du liquide céphalo-rachidien et les particules en mouvement détectées 22 sont des globules blancs. Pour chaque échantillon de liquide céphalo-rachidien représenté par un losange, le nombre en abscisse correspond au nombre de globules blancs déterminés selon la méthode de référence par cytométrie et le nombre en ordonnée correspond au nombre de globules blancs déterminés à l'aide du procédé de détection selon l'invention. Pour un premier échantillon de liquide céphalo-rachidien correspondant au losange le plus à droite sur la figure 8 (échantillon 1 du tableau ci-après), le nombre déterminé de globules blancs via le procédé de détection selon l'invention est égal à 89 et le nombre de globules blancs déterminé pour ce même échantillon avec une méthode de cytométrie est égal à 44. Pour un deuxième échantillon correspondant au losange situé au milieu de la figure 8 (échantillon 7 du tableau ci-après), le nombre de globules blancs déterminé avec le procédé de détection selon l'invention est égal à 37, et celui déterminé par cytométrie pour ce même échantillon est égal à 12. Pour les autres échantillons de liquide céphalo-rachidien (échantillons 2 à 6 du tableau ci-après), correspondants aux losanges situés sur la gauche de la figure 8, le nombre déterminé de globules blancs est faible, par exemple inférieur ou égal à 10, que ce soit avec le procédé selon l'invention ou par cytométrie, et correspond à une absence de méningite.

Les résultats du nombre de globules blancs déterminés à l'aide du procédé de détection selon l'invention et selon la méthode de cytométrie sont en outre indiqués dans le tableau ci-après pour chaque échantillon de liquide corporel 24 testé.

Tableau 1

| Numéro échantillon | Nombre de globules blancs par cytométrie | Nombre de globules blancs avec procédé selon l'invention |
|---|---|---|
| 1 | 44 | 89 |
| 2 | 1 | 2 |
| 3 | 0 | 2 |
| 4 | 2 | 6 |
| 5 | 0 | 20 |
| 6 | 1 | 11 |
| 7 | 12 | 37 |

Même si le nombre de particules en mouvement détecté avec le procédé selon l'invention est relativement différent du nombre de particules détecté par cytométrie dans la goutte 28 de liquide corporel, le procédé de détection selon l'invention permet néanmoins de discriminer un liquide corporel 24 comportant un nombre important de particules en mouvement par rapport à un liquide corporel 24 comportant peu de particules en mouvement, de sorte qu'un diagnostic associé au liquide corporel 24 prélevé, tel que le diagnostic de la méningite, reste satisfaisant comme illustré sur la figure 8. Naturellement, cette méthode est encore à affiner mais on peut d'ores et déjà affirmer que lorsque le nombre de particules dépasse un certain seuil, tel qu'un seuil de 20 globules blancs dans un volume de 10 $\mu$L, une analyse complémentaire par une méthode de référence est préconisée. Ainsi, cette méthode, simple à mettre en oeuvre, rapide et peu couteuse, constitue une aide au diagnostic efficace.

L'étape de caractérisation 140 est par exemple effectuée à l'aide du calcul du ratio R entre l'intensité maximale et l'intensité médiane de la région d'intérêt 76 de l'image comportant ladite figure de diffraction. Une telle caractérisation est illustrée sur les figures 10 et 11 pour lesquels le liquide corporel 24 est du liquide céphalo-rachidien, et les particules à classer sont des globules, à classer suivant deux classes distinctes, à savoir les globules blancs et les globules rouges.

Sur la figure 11, la colonne A correspond à des globules blancs, et les valeurs du ratio R, associées à la colonne A en ordonnée et calculées pour les différentes figures de diffraction correspondant aux globules blancs, sont comprises entre environ 1,5 et 2,8. Plus précisément, les valeurs du ratio R sont le plus fréquemment supérieures à 1,75 lorsque les figures de diffraction correspondent à des globules blancs. Ceci est confirmé par les figures 9 et 10, la figure 9 montrant les 35 figures de diffraction obtenues sur l'échantillon d'un patient affecté de la méningite, échantillon qui ne contient que des globules blancs selon une mesure de cytométrie effectuée en parallèle. La figure 10 illustre les valeurs du ratio R calculées pour chacune des 35 figures de diffraction, les valeurs du ratio R s'étalant de 1,5 à 2,8, principalement de 1,75 à 2,8.

Sur la figure 11, la colonne B correspond à des globules rouges, et les valeurs du ratio R, associées à la colonne B en ordonnée, sont comprises entre 1 et 2,25, et généralement inférieures à 1,75.

Autrement dit, avec un seuil prédéterminé égal à 1,75 dans l'exemple de la figure 11, le calcul du ratio R permettra de discriminer de manière assez efficace les globules rouges des globules blancs, les globules blancs étant considérés comme les particules en mouvement pour lesquelles le ratio R associé est supérieur au seuil prédéterminé, choisi égal à 1,75, et les globules rouges étant considérés comme les particules en mouvement pour lesquelles le ratio R associé est inférieure au seuil prédéterminé.

Ainsi, la méthode peut comprendre une étape 150 de classification des particules détectées, en fonction du critère de caractérisation établi, pour chacune d'entre elles, lors de la phase de caractérisation.

Cette différence de ratio R entre les globules blancs et les globules rouges est également visible sur la figure 12 où la courbe 200 représente un profil d'intensité au voisinage du centre 74 de la figure de diffraction associée à un globule blanc, en fonction d'une distance exprimée en $\mu$m, le centre 74 de la figure de diffraction correspondant à la distance sensiblement égale à 225 $\mu$m. La courbe 210 représente de manière analogue un profil d'intensité au voisinage du centre 74 de la figure de diffraction correspondant à un globule rouge, en fonction de la distance exprimée en $\mu$m, le centre 74 correspondant également à la distance sensiblement égale à 225 $\mu$m.

On constate alors que l'intensité maximale de la figure de diffraction associée au globule blanc est plus importante que celle associée au globule rouge, alors que l'intensité médiane de la figure de diffraction est sensiblement est égale pour le globule blanc et pour le globule rouge, de sorte que le ratio R est plus élevé avec le globule blanc qu'avec le globule rouge.

La classification effectuée lors de l'étape 150 entre deux types de particules, telle que par exemple entre les globules blancs et les globules rouges, permet alors de distinguer les deux formes de méningites, à savoir la méningite infectieuse et l'hémorragie méningée. En effet, la méningite infectieuse correspond au cas où les particules en mouvement sont des globules blancs, et l'hémorragie méningée correspond à celui où les particules en mouvement sont des globules rouges.

On conçoit ainsi que le procédé et le système de détection 20 selon l'invention permettent de détecter les particules 22 en mouvement dans le liquide corporel 24 d'une manière particulièrement peu coûteuse et facile de mise en oeuvre. Ceci permet alors d'effectuer un dénombrement en continu des particules détectées, et de diagnostiquer le cas échéant une maladie particulière, telle que la méningite.

**Revendications**

1. Procédé de diagnostic de la méningite, comprenant les étapes suivantes :

   - la détermination d'un nombre de globules blancs dans une quantité prédéterminée de liquide céphalo-rachidien via la détection d'au moins une particule (22) dans un liquide corporel (24), à l'aide d'un système de détection (20) comprenant une source de lumière (30), un substrat transparent (26) et un photodétecteur matriciel (32), le substrat transparent (26) étant disposé entre la source de lumière (30) et le photodétecteur matriciel (32), le liquide corporel (24) étant le liquide céphalo-rachidien et les particules détectées (22) étant les globules blancs contenus dans ledit liquide céphalo-rachidien,
   ladite détection comprenant les étapes suivantes :

      + le placement du liquide corporel (24) sous forme d'une goutte (28) sur le substrat transparent (26),
      + l'éclairement (100) de la goutte (28) à l'aide de la source de lumière (30),
      + l'acquisition (110) de plusieurs images successives ($I_n$, $I_{n+1}$) de la goutte (28) à l'aide du photodétecteur matriciel (32), chaque image ($I_n$) étant formée par un rayonnement transmis par la goutte éclairée (28) et comportant au moins une figure de diffraction élémentaire (60), chaque figure de diffraction élémentaire (60) correspondant à des ondes diffractées par une particule (22) lors de l'éclairement de la goutte (28),
      + l'identification (120), à partir des images acquises ($I_n$, $I_{n+1}$), de figures de diffraction élémentaires (60) mobiles,
      + le dénombrement (130) de particules (22) en mouvement au sein de la goutte (28), à partir des figures de diffraction élémentaires mobiles ainsi identifiées, et

   - le diagnostic de la méningite si le nombre de globules blancs détectés dans la quantité prédéterminée de liquide céphalo-rachidien est supérieur à une valeur seuil prédéterminée, en dénombrant uniquement les globules blancs en mouvement.

2. Procédé selon la revendication 1, dans lequel ladite détection comprend en outre une étape de chauffage de la goutte (28) pour favoriser le déplacement de particules (22) au sein de la goutte (28).

3. Procédé selon la revendication 1 ou 2, dans lequel chaque image acquise ($I_n$) comporte une pluralité de pixels ($I_n(x,y)$) et le photodétecteur matriciel (32) est adapté pour mesurer l'intensité de chaque pixel ($I_n(x,y)$), et
   dans lequel l'étape (120) d'identification des figures de diffraction élémentaires mobiles comporte :

      - la détermination (200), pour chaque pixel ($I_n(x,y)$) de l'image ($I_n$), de la valeur médiane ($I_{med}(x,y)$) ou de la valeur moyenne ($I_{mean}(x,y)$) de l'intensité dudit pixel pour un ensemble d'images acquises ($I_n,...,I_{n+p}$),
      - le calcul (200), pour au moins une image acquise ($I_n$), d'une image résultante ($I'_n$) par soustraction, pour chaque pixel ($I_n(x,y)$) de l'image acquise, de ladite valeur médiane ($I_{med}(x,y)$) ou de ladite valeur moyenne ($I_{mean}(x,y)$), et
      - la détection (210), sur chaque image résultante ($I'_n$), d'au moins une figure de diffraction, chaque figure de diffraction détectée sur l'image résultante ($I'_n$) correspondant à une figure de diffraction élémentaire mobile.

4. Procédé selon la revendication 3, dans lequel l'étape d'identification (120) comporte en outre le suivi (220) de chaque figure de diffraction élémentaire détectée d'une image résultante ($I'_n$) à l'image résultante suivante ($I'_{n+1}$), chaque figure de diffraction élémentaire mobile ayant, entre deux images résultantes successives ($I'_n$, $I'_{n+1}$), un déplacement

supérieur à une distance minimale prédéterminée ($D_{min}$).

5. Procédé selon la revendication 1 ou 2, dans lequel l'étape (120) d'identification des figures de diffraction élémentaires mobiles comporte :

- la détection (210), sur chaque image acquise ($I_n$), d'au moins une figure de diffraction élémentaire (60) correspondant à une particule (22) au sein de la goutte (28), et
- le suivi (220) de chaque figure de diffraction élémentaire détectée (60) d'une image acquise ($I_n$) à l'image acquise suivante ($I_{n+1}$), chaque figure de diffraction élémentaire mobile ayant, entre deux images acquises successives ($I_n$, $I_{n+1}$), un déplacement supérieur à une distance minimale prédéterminée ($D_{min}$).

6. Procédé selon l'une quelconque des revendications précédentes, dans lequel ladite détection comprend en outre une étape (140) de caractérisation des figures de diffraction élémentaires en mouvement détectées (60) et une étape (150) de classification des figures caractérisées suivant au moins deux catégories distinctes.

7. Procédé selon la revendication 6, dans lequel l'étape de caractérisation (140) comporte le calcul, pour chaque figure de diffraction élémentaire mobile identifiée, d'un ratio (R) entre l'intensité maximale et l'intensité médiane d'une région d'intérêt (76) de l'image comportant ladite figure de diffraction élémentaire mobile identifiée, la classification de ladite figure de diffraction étant alors effectuée en fonction de la valeur du ratio calculé (R).

8. Procédé selon l'une quelconque des revendications 3 à 5, dans lequel l'étape de détection (210) comporte la localisation dans l'image ($I_n$) du centre (74) de chaque figure de diffraction élémentaire (60).

9. Procédé selon la revendication 8, dans lequel la localisation dans l'image ($I_n$) du centre (74) de chaque figure de diffraction élémentaire (60) est réalisée via une autocorrélation avec une figure de diffraction élémentaire de référence.

10. Procédé selon la revendication 8, dans lequel la localisation dans l'image ($I_n$) du centre (74) de chaque figure de diffraction élémentaire (60) est réalisée à partir :

- d'une reconstruction d'une image de la particule associée à ladite figure de diffraction élémentaire, en mettant en oeuvre un algorithme de reconstruction, puis
- de la détection, dans l'image reconstruite, de la position correspondant au centre de ladite figure de diffraction élémentaire.

**Patentansprüche**

1. Verfahren zum Diagnostizieren von Meningitis, das die folgenden Schritte umfasst:

- Bestimmen einer Anzahl von weißen Blutkörperchen in einer vorbestimmten Menge einer Zerebrospinalflüssigkeit über die Detektion mindestens eines Partikels (22) in einer Körperflüssigkeit (24) mit Hilfe eines Detektionssystems (20) mit einer Lichtquelle (30), einem transparenten Substrat (26) und einem Matrixphotodetektor (32), wobei das transparente Substrat (26) zwischen der Lichtquelle (30) und dem Matrixphotodetektor (32) angeordnet wird, wobei die Körperflüssigkeit (24) die Zerebrospinalflüssigkeit ist und die detektierten Partikel (22) die weißen Blutkörperchen sind, die in der Zerebrospinalflüssigkeit enthalten sind,
wobei die Detektion die folgenden Schritte umfasst:

+ Anordnen der Körperflüssigkeit (24) in Form eines Tropfens (28) auf dem transparenten Substrat (26),
+ Beleuchten (100) des Tropfens (28) mit Hilfe der Lichtquelle (30),
+ Erfassen (110) von mehreren aufeinander folgenden Bildern ($I_n$, $I_{n+1}$) des Tropfens (28) mit Hilfe des Matrixphotodetektors (32), wobei jedes Bild ($I_n$) durch eine Strahlung erzeugt wird, die durch den beleuchteten Tropfen (28) durchgelassen wird, und mindestens ein elementares Beugungsmuster (60) umfasst, wobei jedes elementare Beugungsmuster (60) Wellen entspricht, die durch ein Partikel (22) bei der Beleuchtung des Tropfens (28) gebeugt werden,
+ Identifizieren (120) von beweglichen elementaren Beugungsmustern (60) anhand der erfassten Bilder ($I_n$, $I_{n+1}$),
+ Zählen (130) von in Bewegung befindlichen Partikeln (22) im Inneren des Tropfens (28) anhand der so identifizierten beweglichen elementaren Beugungsmuster, und

- Diagnostizieren der Meningitis, wenn die Anzahl von in der vorbestimmten Menge an Zerebrospinalflüssigkeit detektierten weißen Blutkörperchen größer ist als ein vorbestimmter Schwellenwert, indem nur die in Bewegung befindlichen weißen Blutkörperchen gezählt werden.

2. Verfahren nach Anspruch 1, wobei die Detektion außerdem einen Schritt zum Erwärmen des Tropfens (28) umfasst, um die Verlagerung von Partikeln (22) im Inneren des Tropfens (28) zu fördern.

3. Verfahren nach Anspruch 1 oder 2, wobei jedes erfasste Bild ($I_n$) mehrere Pixel ($I_n(x,y)$) umfasst und der Matrixphotodetektor (32) dazu ausgelegt ist, die Intensität jedes Pixels ($I_n(x,y)$) zu messen, und
wobei der Schritt (120) der Identifikation der beweglichen elementaren Beugungsmuster umfasst:

- Bestimmen (200) des Medianwerts ($I_{med}(x,y)$) oder des Mittelwerts ($I_{mean}(x,y)$) der Intensität des Pixels für jedes Pixel ($I_n(x,y)$) des Bildes ($I_n$) für eine Gesamtheit von erfassten Bildern ($I_n, ..., I_{n+p}$),
- Berechnen (200) eines resultierenden Bildes ($I'_n$) für mindestens ein erfasstes Bild ($I_n$) durch Subtraktion des Medianwerts ($I_{med}(x,y)$) oder des Mittelwerts ($I_{mean}(x,y)$) für jedes Pixel ($I_n(x,y)$) des erfassten Bildes, und
- Detektieren (210) mindestens eines Beugungsmusters in jedem resultierenden Bild ($I'_n$), wobei jedes im resultierenden Bild ($I'_n$) detektierte Beugungsmuster einem beweglichen elementaren Beugungsmuster entspricht.

4. Verfahren nach Anspruch 3, wobei der Identifikationsschritt (120) außerdem die Verfolgung (220) jedes detektierten elementaren Beugungsmusters von einem resultierenden Bild ($I'_n$) zum folgenden resultierenden Bild ($I'_{n+1}$) umfasst, wobei jedes bewegliche elementare Beugungsmuster zwischen zwei aufeinander folgenden resultierenden Bildern ($I'_n, I'_{n+1}$) eine Verlagerung aufweist, die größer ist als ein vorbestimmter minimaler Abstand ($D_{min}$).

5. Verfahren nach Anspruch 1 oder 2, wobei der Schritt (120) der Identifikation der beweglichen elementaren Beugungsmuster umfasst:

- Detektieren (210) mindestens eines elementaren Beugungsmusters (60), das einem Partikel (22) im Inneren des Tropfens (28) entspricht, in jedem erfassten Bild ($I_n$), und
- Verfolgen (220) jedes detektierten elementaren Beugungsmusters (60) von einem erfassten Bild ($I_n$) zum folgenden erfassten Bild ($I_{n+1}$), wobei jedes bewegliche elementare Beugungsmuster zwischen zwei aufeinander folgenden erfassten Bildern ($I_n, I_{n+1}$) eine Verlagerung aufweist, die größer ist als ein vorbestimmter minimaler Abstand ($D_{min}$).

6. Verfahren nach einem der vorangehenden Ansprüche, wobei die Detektion außerdem einen Schritt (140) zur Charakterisierung der detektierten in Bewegung befindlichen elementaren Beugungsmuster (60) und einen Schritt (150) zur Klassifikation der charakterisierten Muster gemäß mindestens zwei unterschiedlichen Kategorien umfasst.

7. Verfahren nach Anspruch 6, wobei der Schritt der Charakterisierung (140) die Berechnung eines Verhältnisses (R) zwischen der maximalen Intensität und der Medianintensität eines interessierenden Bereichs (76) des Bildes mit dem identifizierten beweglichen elementaren Beugungsmuster für jedes identifizierte bewegliche elementare Beugungsmuster umfasst, wobei die Klassifikation des Beugungsmusters dann in Abhängigkeit vom Wert des berechneten Verhältnisses (R) durchgeführt wird.

8. Verfahren nach einem der Ansprüche 3 bis 5, wobei der Schritt der Detektion (210) die Lokalisierung des Zentrums (74) jedes elementaren Beugungsmusters (60) im Bild ($I_n$) umfasst.

9. Verfahren nach Anspruch 8, wobei die Lokalisierung des Zentrums (74) jedes elementaren Beugungsmusters (60) im Bild ($I_n$) über eine Autokorrelation mit einem elementaren Referenzbeugungsmuster ausgeführt wird.

10. Verfahren nach Anspruch 8, wobei die Lokalisierung des Zentrums (74) jedes elementaren Beugungsmusters (60) im Bild ($I_n$) ausgeführt wird anhand:

- einer Rekonstruktion eines Bildes des Partikels, das dem elementaren Beugungsmuster zugeordnet ist, indem ein Rekonstruktionsalgorithmus eingesetzt wird, dann
- der Detektion der Position, die dem Zentrum des elementaren Beugungsmusters entspricht, im rekonstruierten Bild.

**Claims**

1. A method for diagnosing meningitis, comprising the following steps:

   - determining a number of white blood cells in a predetermined amount of cerebrospinal fluid via detecting at least one particle (22) in a bodily fluid (24), with a detection system (20) comprising a light source (30), a transparent substrate (26) and a photodetector array (32), the transparent substrate (26) being positioned between the light source (30) and the photodetector array (32), the bodily fluid (24) being the cerebrospinal fluid and the detected particles (22) being the white blood cells contained in said cerebrospinal liquid, the detecting comprising the following steps:

      + placing the bodily fluid (24) as a droplet (28) on the transparent substrate (26),
      + illuminating (100) the droplet (28) with the light source (30),
      + acquiring (110) several successive images ($I_n$, $I_{n+1}$) of the droplet (28) with the photodetector array (32), each image ($I_n$) being formed by radiation transmitted through the illuminated droplet (28) and including at least one elementary diffraction pattern (60), each elementary diffraction pattern (60) corresponding to waves diffracted by a particle (22) during the illumination of the droplet (28),
      + identifying (120), from the acquired images ($I_n$, $I_{n+1}$), mobile elementary diffraction patterns (60),
      + counting (130) moving particles (22) within the droplet (28), from the thereby identified mobile elementary diffraction patterns, and

      - diagnosing meningitis if the number of detected white blood cells in the predetermined amount of cerebrospinal fluid is greater than a predetermined threshold value, by counting only the moving white blood cells.

2. The method according to claim 1, wherein said detecting further comprises a step for heating the droplet (28) for promoting displacement of particles (22) within the droplet (28).

3. The method according to claim 1 or 2, wherein each acquired image ($I_n$) includes a plurality of pixels ($I_n(x,y)$) and the photodetector array (32) is adapted for measuring the intensity of each pixel ($I_n(x,y)$), and wherein the step (120) for identifying the mobile elementary diffraction patterns includes:

   - the determination (200), for each pixel ($I_n(x,y)$) of the image ($I_n$), of the median value ($I_{med}(x,y)$) or of the mean value ($I_{mean}(x,y)$) of the intensity of said pixel for a set of acquired images ($I_n,...,I_{n+p}$),
   - the computation (200) for at least one acquired image ($I_n$), of a resulting image ($I'_n$) by subtracting, for each pixel ($I_n(x,y)$) of the acquired image, said median value ($I_{med}(x,y)$) or said mean value ($I_{mean}(x,y)$), and
   - the detection (210), on each resulting image ($I'_n$), of at least one diffraction pattern, each detected diffraction pattern on the resulting image ($I'_n$) corresponding to a mobile elementary diffraction pattern.

4. The method according to claim 3, wherein the identification step (120) further includes the tracking (220) of each detected elementary diffraction pattern of a resulting image ($I'_n$) to the next resulting image ($I'_{n+1}$), each mobile elementary diffraction pattern having between two successive resulting images ($I'_n$, $I'_{n+1}$), a displacement greater than a predetermined minimum distance ($D_{min}$).

5. The method according to claim 1 or 2, wherein the step (120) for identifying the mobile elementary diffraction patterns includes:

   - the detection (210), on each acquired image ($I_n$), of at least one elementary diffraction pattern (60) corresponding to a particle (22) within the droplet (28), and
   - the tracking (220) of each detected elementary diffraction pattern (60) of an acquired image ($I_n$) to the next acquired image ($I_{n+1}$), each mobile elementary diffraction pattern having, between two successive acquired images ($I_n$, $I_{n+1}$), a displacement greater than a predetermined minimum distance ($D_{min}$).

6. The method according to any of the preceding claims, wherein said detecting further comprises a step (140) for characterizing the detected moving elementary diffraction patterns (60) and a step (150) for classifying the characterized patterns according to at least two distinct categories.

7. The method according to claim 6, wherein the characterization step (140) includes the computation, for each identified mobile elementary diffraction pattern, of a ratio (R) between the maximum intensity and the median intensity of a region of interest (76) of the image including said identified mobile elementary diffraction pattern, the classification of said diffraction pattern then being carried out depending on the computed value of the ratio (R).

8. The method according to any of claims 3 to 5, wherein the detection step (210) includes the localization in the image ($I_n$) of the center (74) of each elementary diffraction pattern (60).

9. The method according to claim 8, wherein the localization in the image ($I_n$) of the center (74) of each elementary diffraction pattern (60) is achieved via autocorrelation with a reference elementary diffraction pattern.

10. The method according to claim 8, wherein the localization in the image ($I_n$) of the center (74) of each elementary diffraction pattern (60) is achieved from:

  - reconstruction of an image of the particle associated with said elementary diffraction pattern, by applying a reconstruction algorithm, and then
  - detecting, in the reconstructed image, the position corresponding to the center of said elementary diffraction pattern.

FIG.1

FIG.2

Eclairement de la goutte de liquide corporel — 100

Acquisition, par le photodétecteur matriciel, d'images successives de la goutte éclairée — 110

120

200

Calcul d'une image résultante pour chaque image acquise

Détection, sur chaque image, de figures de diffraction correspondant chacune à une particule — 210

Suivi, d'une image à l'image suivante, de chaque figure de diffraction détectée — 220

Dénombrement des particules en mouvement au sein de la goutte de liquide corporel — 130

Caractérisation des figures de diffraction détectées pour les particules en mouvement dans la goutte — 140

Classification des figures de diffraction — 150

## FIG.3

FIG.4

FIG.5

FIG.6

## FIG.7

## FIG.8

FIG.9

FIG.10

FIG.11

FIG.12

## RÉFÉRENCES CITÉES DANS LA DESCRIPTION

**Documents brevets cités dans la description**

- WO 2011049965 A1

**Littérature non-brevet citée dans la description**

- **K. BOER et al.** Evaluation of the XE-5000 for the automated analysis of blood cells in cerebrospinal fluid. *Clinical Biochemistry,* 01 Mai 2009, vol. 42 (7-8), 684-691

- **DE HAND A. J. ; SUN T. ; BARBER D. C. ; HOSE D. R ; MACNEIL S.** Automated tracking of migrating cells in phase-contrast video microscopy sequences using image registration. *Journal of Microscopy,* 2009, vol. 234, 62-79